(19) Europäisches Patentamt
European Patent Office
Office européen des brevets

(11) Numéro de publication: **0 351 262**
**A1**

# (12) DEMANDE DE BREVET EUROPEEN

(21) Numéro de dépôt: **89401735.9**

(22) Date de dépôt: **20.06.89**

(51) Int. Cl.$^5$: **C 08 G 77/62**
C 04 B 35/58

(30) Priorité: **22.06.88 FR 8808384**

(43) Date de publication de la demande:
**17.01.90 Bulletin 90/03**

(84) Etats contractants désignés:
**AT BE CH DE ES FR GB GR IT LI LU NL SE**

(71) Demandeur: **ATOCHEM**
**4 & 8, Cours Michelet La Défense 10**
**F-92800 Puteaux (FR)**

(72) Inventeur: **Colombier, Christian**
**19, Place Tolozan**
**F-69001 Lyon (FR)**

**Cuer, Jean-Pierre**
**29, Rue de Bochu**
**F-69340 Francheville le Haut (FR)**

(74) Mandataire: **Rochet, Michel et al**
**ATOCHEM Département Propriété Industrielle La Défense 10 Cédex 42**
**F-92091 Paris La Défense (FR)**

## (54) Polysilazanes, leur procédé de préparation, leur utilisation comme précurseurs de céramiques et lesdites céramiques.

(57) L'invention concerne de nouveaux composés contenant une pluralité de motifs -NR-Si-. Elle concerne également un procédé de préparation de ces polysilazanes par réaction d'un halogénosilane avec une hydrazine.

Les polysilazanes obtenus peuvent être mis en forme et pyrolysés en céramiques.

EP 0 351 262 A1

## Description

### POLYSILAZANES, LEUR PROCEDE DE PREPARATION, LEUR UTILISATION COMME PRECURSEURS DE CERAMIQUES ET LESDITES CERAMIQUES

La présente invention concerne de nouveaux polysilazanes, leur procédé de préparation, leurs applications, notamment en tant que précurseurs de céramiques et les céramiques résultant de leur pyrolyse.

Les expressions polysilazanes, organopolysilazanes, polymères de silazanes où résines de carbosilazanes que l'on rencontre dans la littérature sont généralement utilisées pour désigner des substances polymériques, solides ou liquides plus ou moins visqueuses renfermant une pluralité de motifs -NR-Si-. De telles substances polymériques peuvent être mises en forme et converties par pyrolyse en articles, habituellement appelés céramiques renfermant Si, N et C, et le cas échéant O, le plus souvent sous forme de carbure, nitrures ou carbonitrures de silicium.

Diverses techniques ont été proposées pour préparer les polysilazanes précités. En particulier on a proposé (brevet français 2 190 764) de faire réagir un halogénosilane avec un composé portant un ou plusieurs groupes $NH_2$ ou NH, ce composé pouvant être par exemple une amine primaire ou secondaire, un amide, une hydrazine ou un hydrazide ou, dans le cas d'halogénosilanes contenant du carbone, de l'ammoniac.

Il faut cependant noter que, malgré une importante liste de composés renfermant un ou plusieurs groupes $NH_2$ ou NH, ce brevet français 2 190 764 concerne essentiellement et n'illustre en fait que les polysilazanes dérivés d'amines et plus particulièrement de méthylamine. Au départ d'une amine et notamment de méthylamine, ce brevet décrit un procédé de production d'articles conformés comprenant des mélanges homogènes de carbure de silicium et de nitrure de silicium, procédé comprenant trois étapes, à savoir la préparation d'une résine de carbosilazane fusible par pyrolyse d'un silazane à une température d'environ 200 à 800° C, la mise en forme de la résine de carbosilazane fusible ainsi obtenue puis une nouvelle pyrolyse de ladite résine à 800-2000° C pour convertir le carbosilazane en carbure de silicium et nitrure de silicium.

Il faut effectivement constater que l'utilisation d'une amine justifie ce premier traitement à une température de l'ordre de 200 800°C pour obtenir une résine qu'il est ensuite possible de mettre en forme. D'ailleurs l'enseignement du brevet français 2 197 829 est éloquent sur ce point puisque, ne s'agissant plus des amines comme dans le brevet français 2 190 764 cité plus haut mais d'ammoniac, on constate que cette première phase de pyrolyse n'est plus indispensable et que le silazane obtenu à partir d'halogénosilane et d'ammoniac peut être directement mis en forme et décomposé ensuite en SiC et $Si_3N_4$ par chauffage à une température de 800 à 2000°C, les dits silazanes pouvant déjà être plus ou moins réticulés à basse température (20 à 200°C).

Le brevet francais 2 584 080 enseigne également qu'il est possible d'effectuer un traitement thermique du polysilazane à relativement basse température c'est-à-dire entre 40 et 220°C. Cette possibilité est conditionnée dans ce brevet par la présence dans le polysilazane d'au moins 2 et de préférence au moins 3 groupes $\equiv$ SiH et au moins 2 groupes $\equiv Si-\underset{\underset{H}{|}}{N}-$ par molécule.

Ce polysilazane peut également contenir des groupes hydrocarbonés aliphatiques insaturés liés aux atomes de silicium, de préférence des groupes vinyle. Ces polysilazanes peuvent être obtenus par réaction d'un organohalogénomono-silane sur un composé organique ou organosilylé donnant, après réaction avec un chloro-silane, un groupe -SiNHR. Ces polysilazanes peuvent être pyrolysés à une température pouvant atteindre 1500 à 2000°C.

La présente invention propose de nouveaux polysilazanes pouvant être mis en forme sans traitement thermique préalable et pouvant être pyrolysés en céramique contenant Si, N et éventuellement C et/ou O à une température relativement peu élevée, c'est-à-dire 800 à 1000°C.

L'invention concerne également des polysilazanes pouvant être pyrolysés directement en céramique sans pré-pyrolyse ou traitement thermique intermédiaire.

Un autre objet de l'invention concerne des polysilazanes conduisant, par pyrolyse, à des céramiques avec un rendement en céramique élevé, c'est-à-dire supérieur à 50 %.

D'autres avantages de l'invention apparaîtront à la lecture de l'exposé qui suit.

Les polysilazanes conformes à l'invention sont caractérisés en ce qu'ils comprennent des motifs de formule

$$\equiv Si - \underset{|}{N} - \underset{|}{N} - \qquad (I)$$

dans laquelle au moins une valence du silicium et au moins une valence d'un atome d'azote assurent les liaisons entre les motifs pour former des enchaînements linéaires, ramifiés ou cycliques et en ce que au moins une partie des valences disponibles du silicium est liée à un atome d'hydrogène et/ou un radical hydrocarboné aliphatique insaturé, les valences restantes du silicium et de l'azote pouvant être liées à un atome d'hydrogène, un radical hydrocarboné aliphatique insaturé, un radical alkyle, cycloalkyle, aryle mono- ou polycyclique, alkylaryle ou arylalkyle renfermant jusqu'à 18 atomes de carbone.

L'invention concerne plus spécialement des polysilazanes présentant les motifs indiqués ci-avant et ayant une masse moléculaire moyenne pouvant être comprise entre 220 et 50.000, et de préférence entre 400 et 10.000.

L'invention concerne également un procédé de préparation des polysilazanes comprenant les motifs (I) ledit procédé étant caractérisé en ce qu'il consiste à faire réagir :

. au moins un halogénosilane de formule :
$Si(Y)_a$   (II)
. avec au moins une hydrazine de formule :

$$\overset{|}{\underset{|}{N}} - \underset{|}{NH} \qquad (III)$$

formules dans lesquelles Y représente un atome d'halogène et notamment de chlore, a représente un nombre compris entre 1 et 4 inclus et, de préférence, environ 2, la ou les valences libres du silicium et de l'azote étant liées à un atome d'hydrogène, un radical hydrocarboné aliphatique insaturé ou un des autres radicaux mentionnés dans le cadre de la signification de la formule (I).

L'invention concerne également les articles conformés en céramique, obtenus après mise en forme et pyrolyse des polysilazanes précités. Ces articles, qui peuvent se présenter sous forme de fibres, filaments, poudres, films, revêtements, paillettes, enduits, mousses ou articles tissés, non tissés ou matériaux composites en dérivant, peuvent être transformés en céramique par chauffage. Ces articles céramiques contiennent d'une manière générale les proportions suivantes d'éléments (en poids), par référence au polysilazane pyrolysé :

- 30 à 70 % de Si
- 2 à 30 % de N
- 0 à 35 % de C
- 0 à 25 % de O

A titre d'exemples spécifiques des radicaux portés par les atomes de silicium et d'azote, dans les formules précédentes, on citera en particulier, outre l'hydrogène, les radicaux hydrocarbonés aliphatiques saturés renfermant de 1 à 8 atomes de carbone ; les radicaux insaturés tels que vinyle, allyle ; les radicaux alicycliques renfermant de 3 à 7 atomes de carbone les radicaux phényle, benzyle, phényléthyle, tolyle, xylyle ou naphtyle.

A titre d'exemples spécifiques des halogénosilanes de formule (II) on citera notamment les produits répondant aux formules suivantes :
$SiCl_4$, $(CH_3)_2SiCl_2$ , $(CH_3)_3SiCl$
$CH_3SiCl_3$, $(C_6H_5)_2SiCl_2$, $(C_6H_5)(CH_3)SiCl_2$
$(C_6H_5)SiCl_3$, $(CH_3)(CH_3CH_2)SiCl_2$
$H_2SiCl_2$, $(CH_3)_2HSiCl$, $HSiCl_3$
$CH_3(CH_2{=}CH)SiCl_2$, $(CH_3)_2(CH_2{=}CH)SiCl$
.et $(CH_3)HSiCl_2$

Il ressort de la signification donnée à titre préférentiel pour (a) qu'on utilise avantageusement dans l'invention un ou plusieurs dihalogénosilanes ou un mélange comprenant un ou des dihalogénosilanes et un mono- ou un trihalogénosilane et/ou $SiCl_4$. Le pourcentage d'atomes de chlore apportés par le trihalogénosilane dans le mélange avec le dihalogénosilane n'excède de préférence pas 70 %. Dans le cas de monohalogénosilane ou de $SiCl_4$, ce pourcentage n'excède de préférence pas 30 %.

A titre d'exemples spécifiques des hydrazines de formule (III) on citera notamment l'hydrazine non substituée ($N_2H_4$), la méthylhydrazine, l'éthylhydrazine, la phénylhydrazine, la cyclohexylhydrazine, la diméthyl hydrazine, la diéthyl hydrazine, la diphényl hydrazine, la dibenzyl hydrazine, l'$\alpha$-naphtylhydrazine, la diisopropyl hydrazine, les ditolyl hydrazines, la di-isobutyl hydrazine, la di($\alpha$-naphtyl)hydrazine.

On peut utiliser dans l'invention un mélange comprenant plusieurs hydrazines et notamment plusieurs des produits spécifiquement cités. On utilise avantageusement l'hydrazine $N_2H_4$.

Dans la mise en oeuvre du procédé conforme à l'invention on utilise avantageusement l'hydrazine en quantités telles que le nombre de moles d'hydrazine soit supérieur au nombre de moles d'atomes d'halo gène Y additionné au nombre de moles d'atomes de silicium. Cet excès peut atteindre par exemple 20 %.

La réaction précitée est avantageusement conduite en présence d'une amine tertiaire telle que la triéthylamine, la triméthylamine, la triphénylamine ou la pyridine.

Cette amine a pour rôle principal de limiter la formation d'halogénohydrate d'hydrazine par la formation d'un halogénohydrate de cette amine.

D'une manière générale la quantité d'amine est d'au moins une molécule d'amine par atome d'halogène Y. De préférence, ce taux est excèdentaire, par exemple de 20 %. Lorsqu'on utilise une amine le nombre de moles d'hydrazine peut être supérieur au seul nombre de moles d'atomes de silicium.

Si on utilise un excès d'halogénosilane au sens entendu ci-dessus, il est avantageux, après avoir fait réagir l'hydrazine et le ou les halogénosilanes, de procéder à l'introduction d'un excès d'un réactif permettant d'éliminer cet halogénosilane du produit final, ce réactif pouvant être d'une manière générale une amine ou l'ammoniac par exemple.

Le procédé conforme à l'invention est avantageusement conduit en atmosphère inerte, par exemple sous courant d'azote.

La température est généralement comprise entre - 10 et 100° C. On peut mettre en oeuvre les seuls réactifs

précités (halogénosilane, et hydrazine), le cas échéant additionnés de l'amine tertaire. Préférentiellement on peut faire appel à un solvant du polysilazane final, pouvant notamment être choisi parmi les hydrocarbures aliphatiques ou aromatiques, éventuellement halogénés tels que le toluène, le chlorure de méthylène, le benzène, le xylène, l'hexane, ou les ethers tels que l'ether isopropylique, l'éther diéthylique.

La réaction peut être conduite à pression atmosphérique, sous pression ou sous pression réduite. On opère de préférence à pression atmosphérique.

A l'issue de la réaction, dont la durée peut être comprise entre quelques dizaines de minutes et quelques heures, on élimine les halogénohydrates, par exemple par filtration sous pression réduite ou sous pression d'azote, et élimine le solvant éventuellement utilisé et l'excès d'hydrazine ou d'amine tertiaire, par exemple par évaporation sous pression réduite. On recueille ainsi les polysilazanes conformes à l'invention sous forme de solides, rigides ou gommeux, ou d'huile plus ou moins visqueuse.

Les polysilazanes peuvent ensuite être mis en forme à température ambiante ou après chauffage à une température pouvant atteindre 300° C, par exemple par filage au travers de filières de dimensions appropriées pour obtenir des filaments ayant un diamètre pouvant être compris entre 1 et 200 µm.

On peut également former, à partir de solutions desdits polysilazanes des revêtements sur des supports tels que métaux (silicium métallique, acier, molybdène, alliages riches en nickel), ou céramiques, l'épaisseur desdits revêtements pouvant par exemple être de l'ordre de 0,01 à 100 µm. Dans le cas où le revêtement contient un additif tel que poudres de carbure ou nitrure de silicium, cette épaisseur peut atteindre plusieurs millimètres.

Les polysilazanes mis en forme peuvent ensuite être pyrolysés par chauffage à une température n'excédant pas en général 1000° C, en céramique contenant Si, N éventuellement O et/ou C.

La pyrolyse peut être conduite en atmosphère neutre, c'est-à-dire sous azote ou argon, ou en atmosphère d'ammoniac si l'on veut faire baisser la teneur en carbone de la céramique et même l'éliminer.

Les polysilazanes conformes à l'invention peuvent être obtenus avec des rendements élevés et peuvent eux-mêmes conduire à des céramiques avec des rendements généralement supérieurs à 50 %.

Dans les exemples, les valeurs de rendements en céramique (=poids de céramique obtenue/poids de précurseur engagé X 100) ont été mesurées par analyse thermogravimétrique sans confinement et sous balayage d'azote. La montée en température était de 100° C/heure et était suivie d'un palier d'une heure de 1000° C, température maximale.

EXEMPLE 1

La réaction a lieu dans un réacteur double enveloppe équipé d'un thermomètre, d'un système d'agitation, d'un condenseur (15° C) et d'une arrivée d'azote. Après purge du réacteur à l'azote, on y verse à 15° C 600 ml de toluène, 3 moles de triéthylamine et 1 mole de $CH_3$ Si $HCl_2$. Le réacteur étant agité et refroidi par de l'eau à 15° C, on y verse à débit constant, en 30 mn, 1,4 mole d'hydrazine. Après cette coulée, on porte la température du milieu réactionnel à 60° C pendant 6 heures et enfin, sous faible agitation, à 15° C pendant 15 heures. On filtre le précipité on le lave par 900 ml de toluène sous pression d'azote et on recueille la solution claire. Le solvant et les restes de réactifs volatils sont éliminés à l'aide d'un évaporateur rotatif à 60° C sous pression progressivement réduite de 150 mm de mercure jusqu'à 0,5 mm de mercure en fin d'évaporation. On recueille enfin 56 g d'un produit gommeux.

Le précipité est séché sous azote à 60° C en étuve sous pression réduite à 50 mm de mercure. Par pesée on détermine un poids de 240,6 g, ce qui correspond à un rendement de 87,5 % de la théorie fondée sur la formation de chlorhydrate de triéthylamine.

L'analyse infra-rouge du précipité confirme qu'il s'agit de chlorhydrate de triéthylamine.

Le polysilazane obtenu comporte une pluralité de motifs :

$$- Si\ HCH_3 - \underset{|}{N} - \underset{|}{N} -$$

Le spectre infra-rouge du polysilazane montre une bande ν SiN assez fine de 950 à 1100 $cm^{-1}$ avec un maximum à 988 $cm^{-1}$. La bande ν SiH présente un maximum à 2125 $cm^{-1}$. Ce polysilazane présente une masse moléculaire moyenne environ 1000.

Par analyse thermogravimétrique, on détermine un rendement en céramique de 62 %.

La céramique contient en poids :

- environ 54,1 % de Si
- environ 29,9 % de N
- environ 13,5 % de C
- environ 0,4 % de O

EXEMPLE 2

On opère avec le même appareillage que pour l'exemple 1. Le réacteur étant refroidi à 15° C, on engage 600 ml de toluène, 0,65 mole de $SiHCH_3Cl_2$, 0,35 mole de $Si(CH_3)_2Cl_2$ et 2,4 moles de triéthylamine. On ajoute sous agitation 1 mole d'hydrazine.

On élève ensuite la température du milieu réactionnel à 60° C et maintient à cette température pendant 6

heures. On envoie alors à travers la bouillie 0,5 mole d'ammoniac pur avec un débit constant de 20 l/h.

On ramène ensuite la température du réacteur à 15°C et on laisse reposer la bouillie 15 h sous faible agitation. On filtre le précipité (208 déterminé après séchage) sous pression d'azote et on procède à l'évaporation du solvant et des restes de réactifs comme décrit à l'exemple 1. On recueille 54,5 g d'un liquide très fluide.

Sur le spectre infra-rouge, on observe une bande ν SiN assez fine avec un maximum à 994 $cm^{-1}$ et l'absence de bande ν Si - O

La bande ν SiH présente son maximum à 2129 $cm^{-1}$.

Par analyse thermogravimétrique, on détermine un rendement en céramique de 53,4 %.

La céramique contient en poids :

- environ 53,7 % de Si
- environ 28,9 % de N
- environ 14,6 % de C
- environ 0,3 % de O

Ce polysilazane présente une masse moléculaire moyenne de 1000 environ.

EXEMPLE 3

On opère comme pour l'exemple 2 mais avec 1 mole de $SiCH_3(CH = CH_2)Cl_2$, 1,2 mole d'hydrazine et 2,4 moles de triéthylamine. L'hydrazine est coulée en 30 mn dans le mélange chlorosilane/triéthylamine/toluène à 15°C environ. On porte ensuite la température du réacteur agité à 70°C pendant 6 heures.

On récupère enfin 82 g d'une huile visqueuse. Ce polysilazane présente un rendement en céramique de 58 %.

La céramique contient en poids :

- environ 45 % de Si
- environ 22,4 % de N
- environ 32 % de C
- environ 0,6 % de O

## Revendications

1. Polysilazanes caractérisés en ce qu'ils comprennent des motifs de formule : $\equiv Si - \underset{|}{N} - \underset{|}{N} -$ (I)

dans laquelle au moins une valence d'un atome de silicium et une valence d'un atome d'azote assurent les liaisons entre les motifs pour former des enchaînements linéaires, ramifiés ou cycliques et en ce que au moins une partie des valences disponibles du silicium est liée à un atome d'hydrogène et/ou un radical hydrocarboné aliphatique insaturé, les valences restantes du silicium et de l'azote pouvant être liées à un atome d'hydrogène, un radical hydrocarboné aliphatique insaturé, un radical alkyle, cycloalkyle, aryle mono- ou polycyclique, alkylaryle ou arylalkyle renfermant jusqu'à 18 atomes de carbone.

2. Polysilazanes selon la revendication 1, caractérisés en ce que leur masse moléculaire est comprise entre 200 et 50.000 et de préférence entre 400 et 10.000.

3. Polysilazanes selon l'une quelconque des revendications 1 ou 2, caractérisés en ce que lorsqu'il ne représentent pas H ou un radical hydrocarboné aliphatique insaturé, les substituants des atomes de silicium et d'azote sont choisis dans le groupe constitué par les radicaux hydrocarbonés aliphatiques saturés renfermant de 1 à 8 atomes de carbone, les radicaux alicycliques renfermant de 3 à 7 atomes de carbone les radicaux phényle, benzyle, phényléthyle, tolyle, xylyle ou naphtyle.

4. Procédé de préparation des polysilazanes selon l'une quelconque des revendications 1 à 3, caractérisé en ce qu'il consiste à faire réagir :

- au moins un halogénosilane de formule :

$Si(Y)_a$ (II)

- avec au moins une hydrazine de formule :

$$\overset{|}{\underset{|}{N}} - \underset{|}{NH} \qquad (III)$$

formules dans lesquelles Y représente un atome d'halogène et notamment de chlore, a représente un nombre compris entre 1 et 4 inclus et, de préférence environ 2, la ou les valences libres du silicium et de

l'azote étant liées à un atome d'hydrogène, un radical hydrocarboné aliphatique insaturé ou un des autres radicaux mentionnés dans le cadre de la signification de la formule (I).

5. Procédé selon la revendication 4, caractérisé en ce que l'halogénosilane est choisi dans le groupe constitué par les produits de formules :

$SiCl_4$, $(CH_3)_2SiCl_2$ , $(CH_3)_3SiCl$
$CH_3SiCl_3$, $(C_6H_5)_2SiCl_2$, $(C_6H_5)(CH_3)SiCl_2$
$(C_6H_5)SiCl_3$, $(CH_3)(CH_3CH_2) SiCl_2$
$H_2SiCl_2$, $(CH_3)_2HSiCl$, $HSiCl_3$
$CH_3(CH_2{=}CH)SiCl_2$, $(CH_3)_2(CH_2{=}CH)SiCl$
$(CH_3)HSiCl_2$

6. Procédé selon l'une quelconque des revendications 4 ou 5, caractérisé en ce que l'hydrazine est choisie dans le groupe constitué par l'hydrazine non substituée ($N_2H_4$), la méthylhydrazine, l'éthylhydrazine, la phénylhydrazine, la cyclohexylhydrazine, la diméthyl hydrazine, la diéthyl hydrazine, la diphényl hydrazine, la dibenzyl hydrazine, l'α-naphtylhydrazine, la di-isopropyl hydrazine, les ditolyl hydrazines, la di-isobutyl hydrazine, la (diméthyl phényl) hydrazine, la di(α-naphtyl) hydrazine.

7. Procédé selon l'une quelconque des revendications 4 à 6, caractérisé en ce que l'hydrazine est mise en oeuvre en quantité telle que le nombre de moles d'hydrazine soit supérieur au nombre de moles d'atomes d'halogène Y additionné au nombre de moles d'atomes de silicium.

8. Procédé selon l'une quelconque des revendications 4 à 7, caractérisé en ce que la réaction est effectuée en présence d'une amine tertiaire.

9. Procédé selon la revendication 8 caractérisé en ce que le nombre de moles d'hydrazine est supérieur au nombre de moles d'atomes de silicium.

10. Procédé selon l'une quelconque des revendications 8 à 9, caractérisé en ce que l'amine tertiaire est choisie dans le groupe constitué par la triéthylamine, la triméthylamine, la triphénylamine et la pyridine.

11. Polysilazanes selon l'une quelconque des revendications 1 à 3, caractérisés en ce qu'ils se trouvent sous forme d'articles conformés tels que fibres, filaments, poudres, films, revêtements, paillettes, conduits, mousses ou articles tissés, non tissés ou matériaux composites.

12. Articles en céramiques, caractérisés en ce qu'ils contiennent les proportions suivantes d'éléments (en poids) :

- 30 à 70 % de Si
- 2 à 30 % de N
- 0 à 35 % de C
- 0 à 25 % de O.

et sont obtenus par pyrolyse de polysilazanes conformés selon la revendication 11.

Office européen des brevets

# RAPPORT DE RECHERCHE EUROPEENNE

Numero de la demande

EP 89 40 1735

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | FR-A-2 190 764 (BAYER)<br>* Revendications 1-3; page 3, lignes 30-36; page 4, lignes 1-4 * | 1 | C 08 G 77/62<br>C 04 B 35/58 |
| Y | EP-A-0 235 486 (RHONE-POULENC)<br>* Revendications 1,2,4; page 6, lignes 18-21 * | 1 | |
| Y | EP-A-0 197 863 (RHONE-POULENC)<br>* Revendication 1; page 2, paragraphes 4,5; page 3, paragraphes 1,2; page 4, paragraphes 3,4 * | 1 | |
| A | FR-A-2 590 580 (RHONE-POULENC)<br>* Revendication 1; page 5 * | 1 | |
| A | US-A-4 612 383 (R.M. LAINE)<br>* Revendications 1,9,12 * | 1 | |
| | | | **DOMAINES TECHNIQUES RECHERCHES (Int. Cl.4)** |
| | | | C 08 G<br>C 08 L<br>C 04 B |

Le présent rapport a été établi pour toutes les revendications

| Lieu de la recherche | Date d'achèvement de la recherche | Examinateur |
|---|---|---|
| LA HAYE | 08-11-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)